# EUROPEAN PATENT SPECIFICATION

(11) **EP 4 447 200 B1**
(45) Date of publication and mention of the grant of the patent: **02.12.2026**
(21) Application number: 22916361.3
(22) Date of filing: 31.10.2022
(51) Int. Cl.: H01M 10/658, H01M 10/647, H01M 10/654, H01M 50/105, H01M 50/121, H01M 50/124

(54) **BATTERY CELL ASSEMBLY AND MANUFACTURING METHOD THEREOF**
BATTERIEZELLENANORDNUNG UND HERSTELLUNGSVERFAHREN DAFÜR
ENSEMBLE DE CELLULES DE BATTERIE ET PROCÉDÉ DE FABRICATION ASSOCIÉ

(30) Priority: 27.12.2021 KR 20210187982
(43) Date of publication of application: 16.10.2024
(73) Proprietor: LG Energy Solution, Ltd., Seoul 07335 (KR)
(72) Inventor: PARK, Kyutae, Daejeon 34122 (KR); OH, Sang Seung, Daejeon 34122 (KR); JO, Hyeonsung, Daejeon 34122 (KR); KIM, Shulkee, Daejeon 34122 (KR); KIM, Hyehyeon, Daejeon 34122 (KR)
(74) Representative: Plasseraud IP
(86) International application number: PCT/KR2022/016846
(87) International publication number: WO 2023/128207

(56) References cited:
- JP-A- 2008 171 583
- JP-A- 2010 525 542
- JP-A- 2012 104 545
- JP-A- 2014 093 128
- KR-A- 20140 114 688
- KR-A- 20190 032 024
- KR-A- 20190 065 138
- US-A1- 2010 136 424

## Description

### [Technical Field]

The present invention relates to a battery cell assembly and a manufacturing method thereof, and more particularly, to a battery cell assembly in which heat transfer to adjacent battery cells is blocked and ignition time is delayed and which allows occupant evacuation time to be secured, and a manufacturing method thereof.

### [Background Art]

Generally, as the development and demand for technology for mobile devices or electric vehicles increase, demand for secondary batteries serving as energy sources is rapidly increasing. Accordingly, many studies have been conducted on secondary batteries that can meet various needs.

Representatively, in terms of the shapes of secondary batteries, there is a high demand for prismatic secondary batteries and pouch-type secondary batteries that can be applied to products such as mobile phones and the like with thin thickness, and in terms of materials of secondary batteries, there is a high demand for lithium secondary batteries such as lithium-ion batteries, lithium-ion polymer batteries, and the like with high energy density, discharge voltage, and output stability.

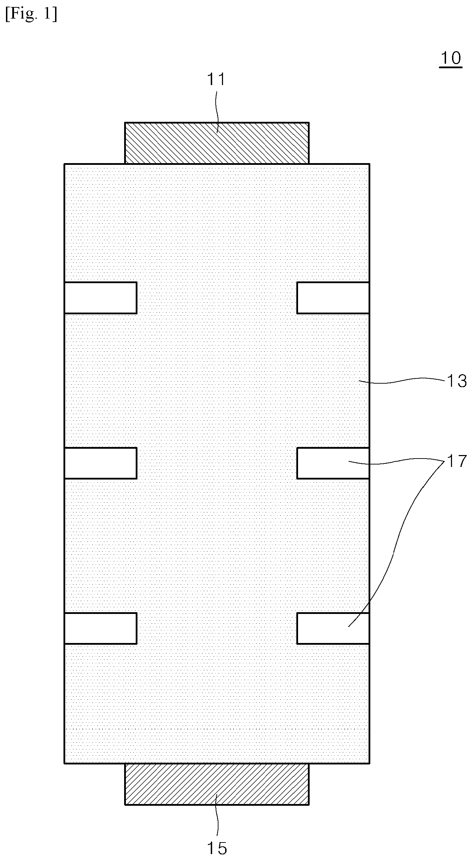

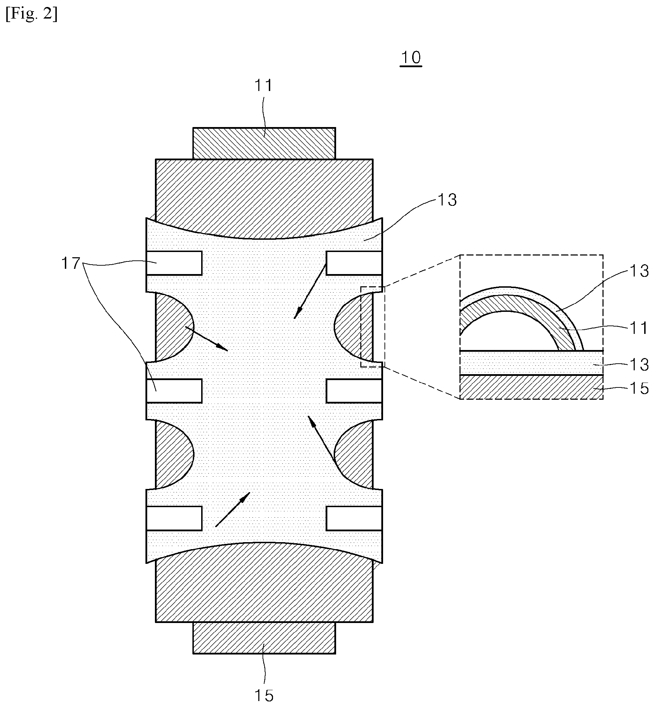

FIG. 1 is a schematic plan view illustrating a conventional battery cell assembly, and FIG. 2 is a schematic plan view illustrating a state in which a separator contracts when the battery cell assembly of FIG. 1 is heated to about 100 to 120 °C.

Referring to FIGS. 1 and 2, a secondary battery is formed by stacking a plurality of battery cells 10. The battery cell 10 is formed by stacking a cathode 11, a separator 13, and an anode 15.

The battery cell 10 may be manufactured through a lamination and stacking process. In this process, a separator 13, a cathode 11, a separator 13, and an anode 15 are stacked and then cut to manufacture mono-cells, and a plurality of mono-cells are stacked.

Such a battery cell 10 has a simple structure and a high degree of electrolyte impregnation, but on the other hand, the battery cell 10 has a problem in that a production rate is slow and the degree of alignment is lowered. A taping process is performed to ensure the degree of alignment of stacked cathodes 11, separators 13, and anodes 15 of the battery cell 10. In the taping process, a plurality of tapes 17 are attached to both side surfaces and portions of upper or lower surfaces of the battery cell 10.

However, as illustrated in FIG. 2, when a conventional battery cell 10 is overheated to about 100 to 120 °C, the separator 13 contracts and the separator 13 and the cathode 11 are deformed into round shapes, and in particular, in a perimeter portion of the separator 13, a portion of the separator 13, to which the tape 17 is attached, does not contract, and a portion of the separator 13, to which the tape 17 is not attached, contracts. Accordingly, since a portion of the separator 13 contracts and the cathode 11 and the anode 15 are exposed, there was a problem in that the cathode 11 and the anode 15 were shorted and ignition occurred.

Further, since a plurality of battery cells 10 are embedded in a battery module, when a specific battery cell 10 is overheated or ignited, thermal propagation to adjacent battery cells 10 proceeds easily. Therefore, the development of technology capable of blocking heat transfer of the battery cell 10 and delaying thermal propagation to adjacent battery cells 10 is required.

The background art of the present invention is disclosed in Korean Laid-open Patent Publication No. 2021-0053570 (published on May 12, 2021).

Document JP 2012 104545 A describes a battery cell assembly comprising a heat resistant film wrapped around the electrode assembly in the battery cell case.

Document KR 2019 0032024 A describes a method for packaging a flexible secondary battery by winding a multi-layered film around a cable-type electrode assembly.

Document JP 2014 093128 A describes a battery cell assembly in which a porous sheet is wrapped around a laminated electrode assembly.

Document KR 2019 0065138 A describes a battery cell assembly comprising unit cells assemblies placed in a wound foldable separator.

### [Disclosure]

### [Technical Problem]

The present invention is directed to providing a battery cell assembly in which heat transfer to adjacent battery cells is blocked and ignition time is delayed and which allows occupant evacuation time to be secured, and a manufacturing method thereof.

### [Technical Solution]

To solve this problem, the invention provides a battery cell assembly according to claim 1.

Advantageous features of the battery cell assembly after the invention are provided in claims 2 and 3.

The invention also provides a method according to claims 4 or 5.

One aspect of the present invention provides a battery cell assembly, which includes a battery cell formed by stacking a plurality of unit cells composed of a cathode, a separator, and an anode; and a thermal insulating cover configured to surround an outer perimeter of the battery cell one or more times.

The thickness of the thermal insulating cover is 10 µm or more and 20 µm or less.

The thermal insulating cover is made of a heat-resistant film.

The thermal insulating cover is a polyimide (PI) film.

A thickness of the PI film is 5 µm or more and 10 µm or less.

The thermal insulating cover is wound around the battery cell to be in close contact with the battery cell.

The battery cell may have a structure in which a plurality of unit cells in a form of a cathode-separator-anode-separator or in a form of an anode-separator-cathode-separator are stacked.

The battery cell may have a structure in which unit cells in a form of a cathode-separator-anode-separator-cathode or unit cells in a form of an anode-separator-cathode-separator-anode are attached to a long separator and then folded and stacked.

Another aspect of the present invention provides a method of manufacturing the battery cell assembly, which includes manufacturing a battery cell by stacking a plurality of unit cells; and forming a thermal insulating cover on a perimeter portion of the battery cell 110 so as to be wound around a perimeter of the battery cell one or more times.

The thermal insulating cover is a PI film.

A thickness of the thermal insulating cover may be determined by the number of times the PI film is wound.

### [Advantageous Effects]

According to the present invention, since a thermal insulating cover is installed to surround a perimeter of a battery cell, it is possible to delay thermal propagation time and ignition time even when the battery cell is heated by the flames of adjacent battery cells.

<0031 According to the present invention, when a thickness of the thermal insulating cover is in a range of 5 to 10 µm, it is possible to minimize an increase in thickness or volume of a battery cell assembly while maximizing thermal propagation delay performance.

According to the present invention, it is possible to determine the thickness of the thermal insulating cover by adjusting the number of times a polyimide film is wound.

In addition to the effects described above, specific effects of the present invention will be described together while describing specific details for embodying the present invention.

### [Description of Drawings]

FIG. 1 is a schematic plan view illustrating a conventional battery cell assembly.
FIG. 2 is a schematic plan view illustrating a state in which a separator contracts when the battery cell assembly of FIG. 1 is heated to about 100 to 120 °C.
FIG. 3 is a schematic plan view illustrating a battery cell assembly according to the present invention.
FIG. 4 is a schematic cross-sectional view illustrating the battery cell assembly of FIG. 3.
FIG. 5 is a schematic view illustrating a state in which a thermal insulating cover is formed by winding a polyimide film one time in the battery cell assembly of FIG. 3.
FIG. 6 is a schematic view illustrating a state in which a thermal insulating cover is formed by winding a polyimide film two times in the battery cell assembly of FIG. 3.
FIG. 7 is a schematic view illustrating a thermal propagation test apparatus for the battery cell assembly according to the present invention.
FIG. 8 is a schematic view illustrating a direction in which a thermal insulating cover contracts when the battery cell assembly according to the present invention is heated to about 110 degrees Celsius.
FIG. 9 is a graph schematically showing a thermal propagation delay time and a cell voltage drop time with respect to a thickness of a polyimide film in the thermal propagation test apparatus of FIG. 7.

### [Reference Numerals]

| | | | |
|---|---|---|---|
| 10: | BATTERY CELL | 11: | CATHODE |
| 13: | SEPARATOR | 15: | ANODE |
| 17: | TAPE | 100: | BATTERY CELL ASSEMBLY |
| 110: | BATTERY CELL | 110a: | UNIT CELL |
| 111: | CATHODE | 112: | CATHODE LEAD |
| 113: | SEPARATOR | 115: | ANODE |
| 116: | ANODE LEAD | 118: | HALF-CELL |
| 120: | THERMAL INSULATING COVER | 121: | POLYMIDE FILM |
| 210: | TRIGGER CELL | 221,222: | ALUMINIUM PLATE |
| 230: | HEATING PAD | 241: | FIRST TEMPERATURE SENSOR |
| 242: | SECOND TEMPERATURE SENSOR | 243: | THIRD TEMPERATURE SENSOR |

### TEMPERATURE SENSOR

### [Modes of the Invention]

Hereinafter, exemplary embodiments of the present invention will be described in detail with reference to the accompanying drawings.

The terminology used herein is for the purpose of describing particular embodiments or examples only and is not intended to limit the present invention. As used herein, the singular forms "a" and "an" are intended to include the plural forms as well, unless the context clearly indicates otherwise. The terms "comprise," "comprising," "include," and/or "including," when used herein, specify the presence of stated features, integers, steps, operations, elements, parts, or combinations thereof. That is, it should be further understood that the terms "comprise," "comprising," "include," and/or "including," when used herein, do not preclude the presence or addition of one or more other features, integers, steps, operations, elements, parts, or combinations thereof.

It will be understood that, although the terms "first," "second," etc. may be used herein to describe various elements, these elements should not be limited by these terms. These terms are only used to distinguish one element from another element.

It should be understood that when a first element is referred to as being "connected" or "coupled" to a second element, the first element may be directly connected or coupled to the second element or intervening elements may be present. In contrast, it should be understood that when the first element is referred to as being "directly connected" or "directly coupled" to the second element, there are no intervening elements present.

It should be understood that when the first element is referred to as being "placed on" or "placed under" the second element, the first element may be directly disposed on the second element or intervening elements may be present.

Unless otherwise defined, all terms including technical and scientific terms used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, a battery cell assembly according to an embodiment of the present invention will be described.

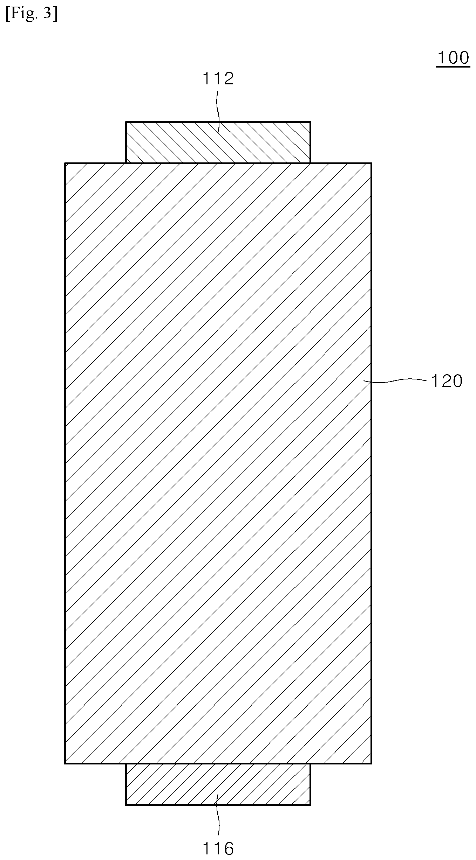

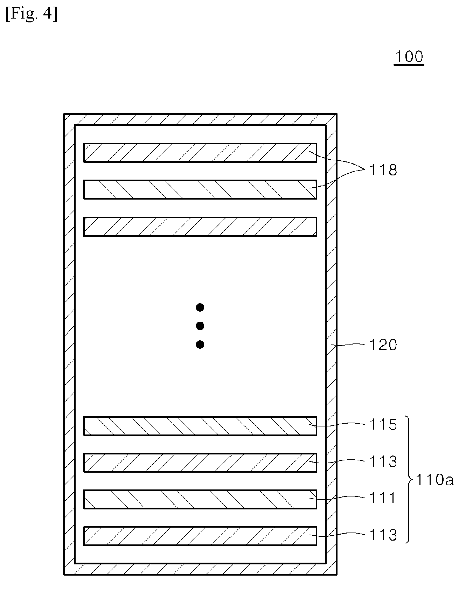

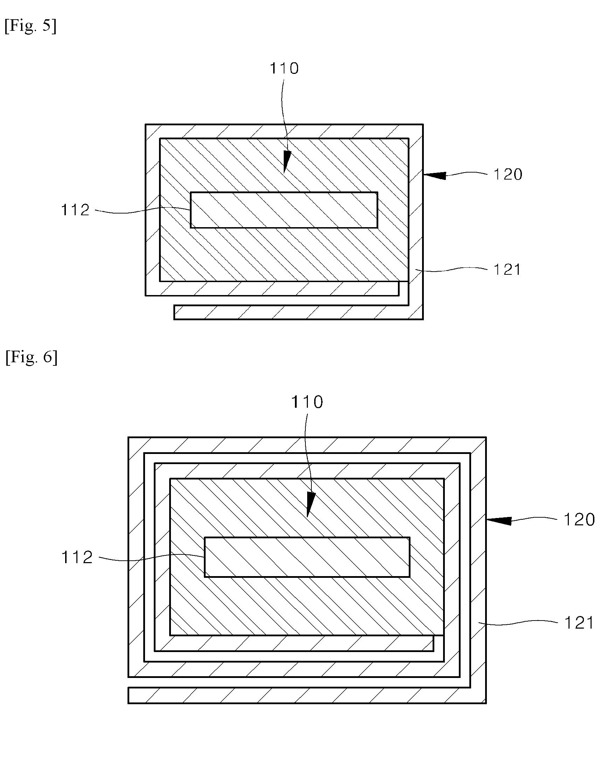

FIG. 3 is a schematic plan view illustrating a battery cell assembly according to the present invention, FIG. 4 is a schematic cross-sectional view illustrating the battery cell assembly of FIG. 3, FIG. 5 is a schematic view illustrating a state in which a thermal insulating cover is formed by winding a polyimide (PI) film one time in the battery cell assembly of FIG. 3, and FIG. 6 is a schematic view illustrating a state in which a thermal insulating cover is formed by winding a PI film two times in the battery cell assembly of FIG. 3.

Referring to FIGS. 3 to 6, a battery cell assembly 100 according to the embodiment of the present invention includes a battery cell 110 and a thermal insulating cover 120.

The battery cell 110 is formed by stacking a plurality of unit cells 110a composed of a cathode 111, a separator 113, and an anode 115. A cathode lead 112 is connected to the cathode 111 and an anode lead 116 is connected to the anode 115. The separator 113 is interposed between the cathode 111 and the anode 115.

The battery cell 110 according to the present invention may be manufactured by stacking mono-cells or bi-cells and stacking half-cells 118 on an uppermost end portion. The half-cell 118 has a structure in which only any one of the cathode 111 and the anode 115 is stacked on the separator 113.

The mono-cell is a unit cell 110a in which an electrode disposed at an uppermost end portion and an electrode disposed at a lowermost end portion have polarities opposite to each other. For example, a unit cell 110a in which a cathode 111, a separator 113, an anode 115, and a separator 113 are sequentially stacked is referred to as a C-type mono-cell, and a unit cell 110a in which an anode 115, a separator 113, a cathode 111, and a separator 113 are sequentially stacked is referred to as an A-type mono-cell.

The bi-cell has a structure in which electrodes having the same polarity are disposed on both outermost surfaces of a unit cell 110a. For example, a unit cell 110a in which a cathode 111, a separator 113, an anode 115, a separator 113, and a cathode 111 are sequentially stacked is referred to as a C-type bi-cell, and a unit cell 110a in which an anode 115, a separator 113, a cathode 111, a separator 113, an anode 115 are sequentially stacked is referred to as an A-type bi-cell.

First, a process of manufacturing a battery cell 110 by stacking mono-cells will be described.

An anode 115, a separator 113, a cathode 111, and a separator 113 are continuously unwound and supplied while being wound in a roll form, and the anode 115 and the cathode 111 are cut and loaded on the separators 113. The separators 113 on which the anode 115 and the cathode 111 are loaded are supplied to a laminating device, and while passing through the laminating device, the anode 115, the separator 113, the cathode 111, and the separator 113 are bonded due to heat and pressure. While the anode 115, the separator 113, the cathode 111, and the separator 113 that are bonded are transferred, mono-cells are continuously manufactured by cutting between an anode 115 and another anode 115 that are adjacent to each other (or between a cathode 111 and another cathode 111 that are adjacent to each other). In a stacking process, the battery cell 110 may be manufactured by stacking the plurality of unit cells (mono-cells) 110a manufactured in this way in the form of a cathode 111-separator 113-anode 115-separator 113 or in the form of an anode 115-separator 113-cathode 111-separator 113 and stacking a half-cell 118 on an uppermost unit cell 110a. Such a method of manufacturing the battery cell 110 is referred to as a lamination and stacking method.

Next, a process of manufacturing a battery cell by stacking bi-cells will be described.

Unit cells 110a in the form of a cathode 111-separator 113-anode 115-separator 113- cathode 111 or unit cells 110a in the form of an anode 115-separator 113-cathode 111-separator 113-anode 115 are continuously attached to long separators 113. The stacks of the separators 113 are folded and stacked while being rotated in one direction. In addition, half-cells 118 are stacked on an uppermost unit cell 110a. Such a method of manufacturing the battery cell 110 is referred to as a stacking and folding method.

In the battery cell 110 described above, the cathode 111, the separator 113, and the anode 115 may be stacked in various forms. Further, as illustrated in FIG. 1, a plurality of tapes (not illustrated) may be attached to perimeter portions of the battery cell 110 in which the cathode 111, the separator 113, and the anode 115 are stacked.

The thermal insulating cover 120 may be installed to surround an outer perimeter of the battery cell 110 with a heat-resistant film one or more times. The thermal insulating cover 120 may be made of a film having an excellent heat insulation property and excellent heat resistance. For example, various types of films, such as a PI film 121 and the like, may be used as the thermal insulating cover 120.

A thickness of the thermal insulating cover 120 is 10 µm or more and 20 µm or less. When the thickness of the thermal insulating cover 120 is less than 10 µm, the heat insulation performance and heat resistance of the thermal insulating cover 120 are degraded, and thus it may be difficult to sufficiently delay thermal propagation. Further, it can be seen that when the thickness of the thermal insulating cover 120 exceeds 20 µm, the thermal propagation delay time is hardly increased even when the thickness of the thermal insulating cover 120 is increased. This will be described in detail below.

A thickness of the PI film 121 is 5 µm or more and 10 µm or less. When the thickness of the PI film 121 is less than 5 µm, the number of times the PI film 121 is wound around the battery cell 110 is increased, and thus the battery cell assembly productivity may be reduced. Further, when the thickness of the PI film 121 exceeds 10 µm, it may be difficult to wind the PI film 121 around the battery cell 110 to be in close contact with the battery cell 110. Further, when the PI film 121 having a thickness of 5 µm or more and 10 µm or less is used, the thickness of the thermal insulating cover 120 may be easily adjusted in units of multiples of 5 µm according to the number of times the PI film 121 is wound.

As described above, since the thermal insulating cover 120 is installed to surround the perimeter of the battery cell 110, even when the battery cell 110 is heated by the flames of adjacent battery cells, the thermal insulating cover 120, the anode 115, the cathode 111, and the separator 113 may contract in all directions during the thermal propagation delay time, and thus a PI barrier may be generated. Further, since the anode 115, the cathode 111, and the separator 113 contract in the same direction, the cathode 111 and the anode 115 may be shorted, and thus the time at which ignition occurs may be delayed.

A method of manufacturing the battery cell assembly according to the present invention configured as described above will be described.

A battery cell 110 is manufactured by stacking a plurality of unit cells 110a. In this case, the battery cell 110 may be manufactured by stacking a plurality of mono-cells or the battery cell 110 may be manufactured by stacking a plurality of bi-cells. Such a battery cell 110 may be manufactured by a lamination and stacking method or a stacking and folding method.

A thermal insulating cover 120 is formed on a perimeter portion of the battery cell 110 to be wound around a perimeter of the battery cell 110 one or more times. The thermal insulating cover 120 is a PI film 121. In this case, a thickness of the thermal insulating cover 120 is determined by the number of times the PI film 121 is wound. For example, a 5 µm thermal insulating cover 120 may be formed by winding a 5 µm PI film 121 one time around the perimeter of the battery cell 110, or a 10 µm thermal insulating cover 120 may be formed by winding a 5 µm PI film 121 two times or a 10 µm PI film 121 one time around the perimeter of the battery cell 110.

A thermal propagation test of the battery cell assembly described above will be described.

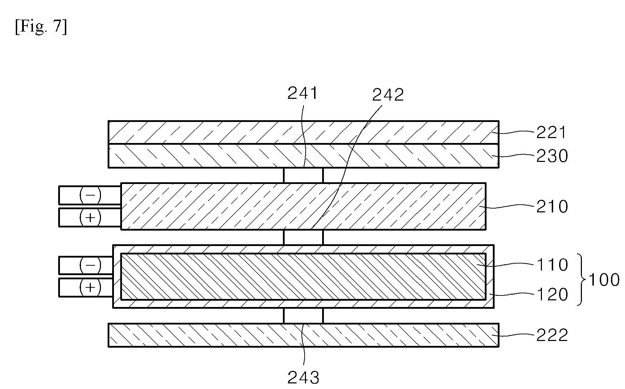

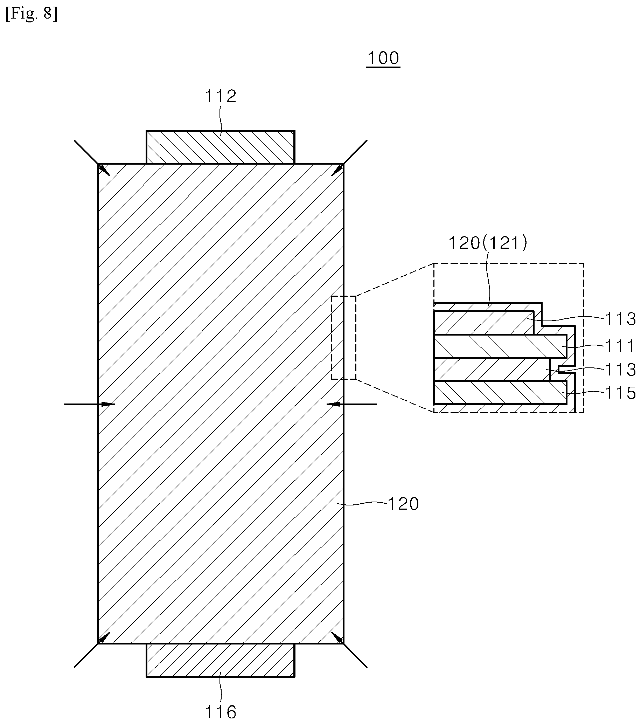

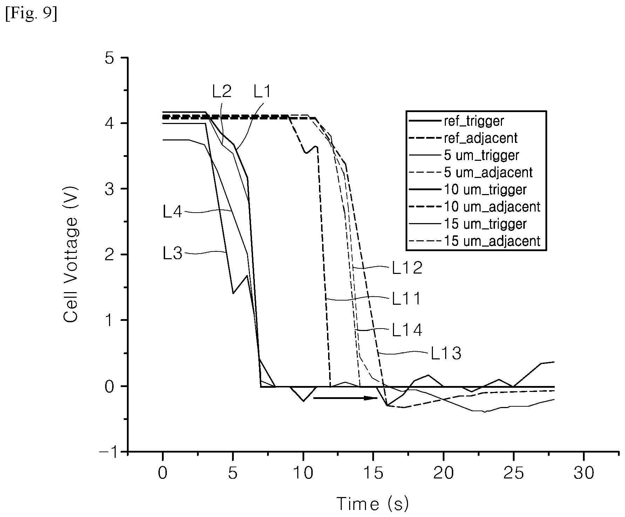

FIG. 7 is a schematic view illustrating a thermal propagation test apparatus for the battery cell assembly according to the present invention, FIG. 8 is a schematic view illustrating a direction in which a thermal insulating cover contracts when the battery cell assembly according to the present invention is heated to about 110 degrees Celsius, and FIG. 9 is a graph schematically showing a thermal propagation delay time and a cell voltage drop time with respect to a thickness of a PI film in the thermal propagation test apparatus of FIG. 7.

Referring to FIGS. 7 to 9, a trigger cell 210 around which no thermal insulating cover 120 is wound and a battery cell 110 (adjacent) around which a thermal insulating cover 120 is wound are prepared. The trigger cell 210 and the battery cell 110 are disposed between a pair of aluminum plates 221 and 222, and a heating pad 230 is interposed between the trigger cell 210 and one of the aluminum plates 221 and 222. Further, a first temperature sensor 241 is interposed between the trigger cell 210 and the heating pad 230, a second temperature sensor 242 is interposed between the trigger cell 210 and the battery cell 110, and a third temperature sensor 243 is interposed between the battery cell 110 and the other of the aluminum plates 221 and 222. When power is supplied to the heating pad 230, the heating pad 230 heats the trigger cell 210.

It can be seen that a thermal propagation (TP) time from a reference trigger cell 210 without the thermal insulating cover 120 to the battery cell 110 without the thermal insulating cover 120 takes about 5 seconds (L1, L11), a TP time from the trigger cell 210 to the battery cell 110 with a thermal insulating cover 120 having a thickness of 5 µm is increased by about 40% (L2, L12), and a TP time from the trigger cell 210 to the battery cell 110 with a thermal insulating cover 120 having a thickness of 10 µm is increased by about 110% (L3, L13). However, it can be seen that a TP time from the trigger cell 210 to the battery cell 110 with a thermal insulating cover 120 having a thickness of 15 µm is rather reduced by about 100% (L4, L14).

Further, it can be seen that a cell voltage drop time from 4 V to 0 V of the battery cell 110 without the thermal insulating cover 120 takes about 2 seconds (L1, L11), a cell voltage drop time of the battery cell 110 with a thermal insulating cover 120 having a thickness of 5 µm is increased by about 100% (L2, L12), and a cell voltage drop time of the battery cell 110 with a thermal insulating cover 120 having a thickness of 10 µm is increased by about 150% (L3, L13). However, it can be seen that a cell voltage drop time of the battery cell 110 with a thermal insulating cover 120 having a thickness of 15 µm is rather reduced by about 50% (L4, L14).

As described above, it can be seen that in the section where the thickness of the thermal insulating cover 120 is in a range of 5 to 10 µm, the thermal propagation delay time and the cell voltage drop time are rapidly increased as the thickness of the thermal insulating cover 120 is increased, whereas in the section where the thickness of the thermal insulating cover 120 is in a range of 10 to 15 µm, the thermal propagation delay time and the cell voltage drop time are rather reduced even when the thickness of the thermal insulating cover 120 is increased. Therefore, through the above test, it can be seen that the section where the thickness of the thermal insulating cover 120 is in a range of 5 to 10 µm is a section in which an increase in thickness or volume of the battery cell assembly 100 can be minimized while thermal propagation delay performance can be maximized.

## Claims

1. A battery cell assembly comprising:
a battery cell (110) formed by stacking a plurality of unit cells (110a) including a cathode (111), a separator (113), and an anode (115); and
a thermal insulating cover (120) configured to surround an outer perimeter of the battery cell (110) at least once,
wherein a thickness of the thermal insulating cover (120) is 10 µm or more and 20 µm or less,
wherein the thermal insulating cover (120) is made of a heat-resistant film,
wherein the thermal insulating cover (120) is a polyimide film (121),
**characterized in that** a thickness of the polyimide film (121) is 5 µm or more and 10 µm or less,
wherein the thermal insulating cover (120) is wound around the battery cell (110) to be in close contact with the battery cell (110).
[

2. The battery cell assembly of claim 1, wherein the battery cell (110) has a structure in which a plurality of unit cells (110a) in a form of a cathode-separator-anode-separator or in a form of an anode-separator-cathode-separator are stacked.

3. The battery cell assembly of claim 1, wherein the battery cell (110) has a structure in which unit cells (110a) in a form of a cathode-separator-anode-separator-cathode or unit cells (110a) in a form of an anode-separator-cathode-separator-anode are attached to a long separator and then folded and stacked.

4. A method of manufacturing the battery cell assembly of any one of claims 1 to 3, comprising:
manufacturing the battery cell (110) by stacking the plurality of unit cells (110a); and
forming the thermal insulating cover (120) on the perimeter portion of the battery cell (110) to be wound around the perimeter of the battery cell (110) at least once.

5. The method of claim 4, wherein a thickness of the thermal insulating cover (120) is determined by the number of times the PI film (121) is wound.

## Patentansprüche

1. Batteriezellenanordnung, umfassend :
eine Batteriezelle (110), die durch Stapeln einer Vielzahl von Einheitszellen (110a) gebildet ist, die eine Kathode (111), einen Separator (113) und eine Anode (115) enthalten ; und
eine Wärmeisolationsabdeckung (120), die so konfiguriert ist, dass sie einen Außenumfang der Batteriezelle (110) mindestens einmal umgibt,
wobei eine Dicke der Wärmeisolationsabdeckung (120) 10 µm oder mehr und 20 µm oder weniger beträgt,
wobei die Wärmeisolationsabdeckung (120) aus einer hitzebeständigen Folie hergestellt ist,
wobei die Wärmeisolationsabdeckung (120) eine Polyimidfolie (121) ist,
**dadurch gekennzeichnet, dass** eine Dicke der Polyimidfolie (121) 5 µm oder mehr und 10 µm oder weniger beträgt,
wobei die Wärmeisolationsabdeckung (120) um die Batteriezelle (110) gewickelt ist, um in engem Kontakt mit der Batteriezelle (110) zu stehen.

2. Batteriezellenanordnung nach Anspruch 1, wobei die Batteriezelle (110) eine Struktur aufweist, in der eine Vielzahl von Einheitszellen (110a) in Form von Kathode-Separator-Anode-Separator oder in Form von Anode-Separator-Kathode-Separator gestapelt ist.

3. Batteriezellenanordnung nach Anspruch 1, wobei die Batteriezelle (110) eine Struktur aufweist, in der Einheitszellen (110a) in Form von Kathode-Separator-Anode-Separator-Kathode oder Einheitszellen (110a) in Form von Anode-Separator-Kathode-Separator-Anode an einem langen Separator angebracht und dann gefaltet und gestapelt sind.

4. Verfahren zum Herstellen der Batteriezellenanordnung nach einem der Ansprüche 1 bis 3, umfassend :
Herstellen der Batteriezelle (110) durch Stapeln der Vielzahl von Einheitszellen (110a); und
Bilden der Wärmeisolationsabdeckung (120) auf dem Umfangsabschnitt der Batteriezelle (110), so dass sie mindestens einmal um den Umfang der Batteriezelle (110) gewickelt wird.

5. Verfahren nach Anspruch 4, wobei eine Dicke der Wärmeisolationsabdeckung (120) durch die Anzahl der Wicklungen der PI-Folie (121) bestimmt wird.

## Revendications

1. Ensemble de cellules de batterie comprenant :
une cellule de batterie (110) formée en empilant une pluralité de cellules unitaires (110a) comprenant une cathode (111), un séparateur (113) et une anode (115) ; et
une enveloppe d'isolation thermique (120) configurée pour entourer un périmètre externe de la cellule de batterie (110) au moins une fois,
dans lequel une épaisseur de l'enveloppe d'isolation thermique (120) est de 10 µm ou plus et de 20 µm ou moins,
dans lequel l'enveloppe d'isolation thermique (120) est constituée d'un film résistant à la chaleur,
dans lequel l'enveloppe d'isolation thermique (120) est un film de polyimide (121),
**caractérisé en ce qu'**une épaisseur du film de polyimide (121) est de 5 µm ou plus et de 10 µm ou moins,
dans lequel l'enveloppe d'isolation thermique (120) est enroulée autour de la cellule de batterie (110) de manière à être en contact étroit avec la cellule de batterie (110).

2. Ensemble de cellules de batterie selon la revendication 1, dans lequel la cellule de batterie (110) a une structure dans laquelle une pluralité de cellules unitaires (110a) sous la forme d'un ensemble cathode-séparateur-anode-séparateur ou sous la forme d'un ensemble anode-séparateur-cathode-séparateur sont empilées.

3. Ensemble de cellules de batterie selon la revendication 1, dans lequel la cellule de batterie (110) a une structure dans laquelle des cellules unitaires (110a) sous la forme d'un ensemble cathode-séparateur-anode-séparateur-cathode ou des cellules unitaires (110a) sous la forme d'un ensemble anode-séparateur-cathode-séparateur-anode sont fixées à un long séparateur, puis pliées et empilées.

4. Procédé de fabrication de l'ensemble de cellules de batterie selon l'une quelconque des revendications 1 à 3, comprenant :
la fabrication de la cellule de batterie (110) en empilant la pluralité de cellules unitaires (110a) ; et
la formation de l'enveloppe d'isolation thermique (120) sur la partie périphérique de la cellule de batterie (110) pour être enroulée autour du périmètre de la cellule de batterie (110) au moins une fois.

5. Procédé selon la revendication 4, dans lequel une épaisseur de l'enveloppe d'isolation thermique (120) est déterminée par le nombre de fois que le film PI (121) est enroulé.
